· Europäisches Patentamt

European Patent Office

Office européen des brevets

(19)

(11) Veröffentlichungsnummer: **0 075 536**
**B1**

(12) # EUROPÄISCHE PATENTSCHRIFT

(45) Veröffentlichungstag der Patentschrift:
**16.01.85**

(51) Int. Cl.⁴: **B 01 D 53/34**, B 01 D 53/14

(21) Anmeldenummer: **82810382.0**

(22) Anmeldetag: **13.09.82**

(54) Verfahren zur absorptiven Abscheidung von organischen Stoffen aus Abluftdämpfen.

(30) Priorität: **18.09.81 CH 6044/81**

(43) Veröffentlichungstag der Anmeldung:
**30.03.83 Patentblatt 83/13**

(45) Bekanntmachung des Hinweises auf die Patenterteilung:
**16.01.85 Patentblatt 85/3**

(84) Benannte Vertragsstaaten:
**AT CH DE GB LI**

(56) Entgegenhaltungen:
**DE - A - 2 120 312**
**US - A - 3 778 968**

(73) Patentinhaber: **CIBA-GEIGY AG, Postfach,
CH-4002 Basel (CH)**

(72) Erfinder: **Bentz, Rolf, Dr., Haltingerstrasse 75,
CH-4057 Basel (CH)**
Erfinder: **Schori, Christian, Eptingerstrasse 36,
CH-4132 Muttenz (CH)**

EP 0 075 536 B1

## Beschreibung

Gegenstand der Erfindung ist ein Verfahren zur absorptiven Abscheidung von organischen Stoffen, insbesondere von Nitro-, Dichlor- und Trichlorbenzol, aus Abluftdämpfen.

Industrieabgase und Abluftdämpfe von chemischen oder medizinischen Laboratorien oder auch von Putzereien enthalten häufig mehr oder weniger grosse Mengen an organischen Lösungsmitteldämpfen. Die ungehinderte Abgabe an die Aussenluft wirft einerseits beträchtliche ökologische Probleme auf, andererseits fällt der auf diese Weise mögliche Verlust von grösseren Lösungsmittelmengen wirtschaftlich ins Gewicht. Es ist daher in zunehmendem Masse notwendig, die in der Abluft enthaltenen Lösungsmitteldämpfe zurückzuhalten und der Wiederverwendung zuzuführen.

In der Regel wird in bekannten Verfahren die Abluft über ein festes Adsorbens geleitet, das in bisher technisch angewendeten Prozessen praktisch ausschliesslich aus Aktivkohle bestand. Siehe dazu beispielsweise die deutschen Offenlegungsschriften Nrn. 2735568 und 2901894. Trotz der bisher grossen Verbreitung von Aktivkohle als Adsorptionsmittel weist diese auch einige Nachteile auf. Einerseits ist im Falle von mit organischen Lösungsmitteln (die oft einen sehr tiefen Flammpunkt aufweisen) beladener Aktivkohle die Sicherheit der Anlage nicht voll gewährleistet. Andererseits ist auch das Verhältnis zwischen maximaler Beladung der Aktivkohle und der Restbeladung nach der Regenerierung nicht optimal.

In der europäischen Patentanmeldung Nr. 30921 ist ein Verfahren zur Abtrennung von Nitro-, Di- und/oder Trichlorbenzol aus Abluftdämpfen durch Adsorption an kieselgelhaltiges Material mit anschliessender Regenerierung des Adsorbens durch Austreiben der adsorbierten Verbindungen beschrieben, welches ein günstigeres Verhältnis der maximalen Beladung zur Restbeladung nach der Regenerierung aufweist als bei der Adsorption an Aktivkohle. Nachteilig wirkt sich bei einigen kieselgelhaltigen Materialien ein zu starker Abrieb aus.

Es wurde nun ein Verfahren zur adsorptiven Abscheidung von organischen Stoffen, insbesondere von Nitro-, Dichlor- und Trichlorbenzol, aus Abluftdämpfen gefunden, welches an Wirksamkeit den vorgenannten Verfahren der adsorptiven Abscheidung überlegen ist.

Das erfindungsgemässe Verfahren ist dadurch gekennzeichnet, dass man organische Stoffe enthaltende Abluftdämpfe durch eine mit Wasser homogen mischbare, hochsiedende organische Flüssigkeit leitet, anschliessend Wasser zum Absorbens gibt und den abgeschiedenen organischen Stoff nach der Phasentrennung vom Adsorbens/Wasser-Gemisch abtrennt.

Der abgeschiedene organische Stoff, im nachfolgenden meist als Schadstoff bezeichnet, fällt nach der Phasentrennung an und kann in praktisch reiner Form zurückgewonnen werden. Aus dem Absorbens/Wasser-Gemisch wird vor dem erneuten Einsatz das Wasser entweder abdestilliert oder durch Erwärmen, vorzugsweise auf 70-120° C, und Strippen mit Schadstoff beladener Luft ausgetrieben und anschliessend durch Abkühlung des Luft/Dampf-Gemisches auskondensiert.

Bei den abzutrennenden organischen Stoffen handelt es sich vorzugsweise um wasserunlösliche Verbindungen. Besonders gut abtrennbare Verbindungen sind 1,2-Dichlorbenzol, 1,2,4-Trichlorbenzol und insbesondere Nitrobenzol, während als hochsiedende organische Flüssigkeit vorzugsweise Polyäthylenglykol verwendet wird. Weitere abtrennbare Stoffe sind beispielsweise Acrylnitril, Epichlorhydrin, Methylenchlorid, Perchloräthylen, Chlorbenzol und Toluol, die jedoch eine niedrigere Sättigungskonzentration in der hochsiedenden organischen Flüssigkeit, insbesondere in Polyäthylenglykol, aufweisen als die als bevorzugt genannten wasserunlöslichen organischen Stoffe. Neben dem bevorzugten Polyäthylenglykol eignen sich noch andere mehrwertige Alkohole wie beispielsweise Glykol, Äthylenglykol, Polypropylenglykol und Glyzerin, oder auch Paraffin- und Silikonöle als Absorbentien für das erfindungsgemässe Verfahren, in denen sich die abzuscheidenden Stoffe jedoch weniger gut lösen.

Das erfindungsgemässe Verfahren kann in jeder technisch angewendeten oder aus der Literatur bekannten Apparatur durchgeführt werden, die eine Vorrichtung enthält, in der ein Gas durch ein flüssiges Absorbens durchgeleitet werden kann. Dazu gehört beispielsweise ein einfacher Gaswaschturm, welcher das Absorptionsmittel enthält, durch das Gasgemisch bis zur Sättigung eingeleitet wird. Es können auch mehrere hintereinandergeschaltete Waschtürme verwendet werden, wobei das Absorptionsmittel in jedem Turm im Kreislauf umgewälzt wird und der Überlauf von Turm zu Turm über den Sumpf erfolgt. Eine weitere Möglichkeit, das Verfahren anzuwenden, besteht in der Absorption nach dem Gegenstromprinzip in einer mehrteiligen Kolonne. Die vorgenannten Methoden werden in den nachfolgenden Beispielen als Laborversuche beschrieben, die gleichzeitig dazu dienen, die Sättigungskonzentration einiger Schadstoffe in den Absorbentien, insbesondere in Polyäthylenglykol, zu bestimmen.

*Beispiel 1:*

*Sättigung in der Gaswaschflasche*

Durch Mischen eines Luftstromes, der zur Sättigung durch das entsprechende Lösungsmittel geleitet wird, mit Raumluft wird die erwünschte Schadstoffkonzentration in der Luft hergestellt. Die Volumina der beiden Gasströme werden über Rotameter eingestellt und das Totalvolumen pro Stunde beträgt 300 l. Das Gasgemisch gelangt über eine Fritte in die mit dem Absorptionsmittel gefüllte, thermostatisierte Gaswaschflasche. Zur Bestimmung des Sättigungspunktes wird der Gasaustritt mit einem Hydrocarbonanalyzer FID überwacht. Sobald die Ausgangs- gleich der Eintrittskonzentration ist, wird der Versuch abgebrochen. Da auch die Luftfeuchtigkeit absorbiert werden kann, muss die Laborluft bei dieser Methode mit Blaugel getrocknet werden. Die Konzentration des organischen Schadstoffes im Absorptionsmittel wird im Gaschromatografen ermittelt.

| Lösungsmittel | Absorbens | Gaskonzentration am Eintritt $(mg/m^3)$ | Temp. (°C) | Sättigungskonzentration (%) |
|---|---|---|---|---|
| Acrylnitril | PEG 400 | 500 | 22 | 0,045 |
| Acrylnitril | PPG 1200 | 500 | 22 | 0,1 |
| Acrylnitril | Paraffinöl | 500 | 22 | 0,1 |
| Acrylnitril | Äthylenglykol | 500 | 22 | 0,1 |
| Epichlorhydrin | PEG 400 | 220 | 22 | 0,1 |
| Epichlorhydrin | Paraffinöl | 220 | 22 | 0,1 |
| Methylenchlorid | PEG 400 | 6700 | 22 | 0,17 |
| Methylenchlorid | Glykol | 6300 | 21 | 0,019 |
| Methylenchlorid | Glyzerin | 6300 | 25 | 0,09 |
| Methylenchlorid | Baysilonöl PD5 | 6300 | 25 | 0,034 |
| Methylenchlorid | Baysilonöl M300 | 6300 | 25 | 0,022 |
| Perchloräthylen | PEG 400 | 2800 | 22 | 0,32 |
| Chlorbenzol | PEG 400 | 3300 | 22 | 1,2 |
| o-Dichlorbenzol | PEG 400 | 2800 | 22 | 9,7 |
| 1,2,4-Trichlorbenzol | PEG 400 | 1900 | 22 | 26,6 |
| 1,2,4-Trichlorbenzol | PEG 400 | 1900 | 43 | 10,3 |
| 1,2,4-Trichlorbenzol | PEG 400 | 1900 | 48 | 7,5 |
| 1,2,4-Trichlorbenzol | PEG 400 | 1900 | 60 | 3,8 |
| 1,2,4-Trichlorbenzol | PEG 400 | 4000 | 22 | 0,31 |

PEG = Polyäthylenglykol
PPG = Polypropylenglykol

*Beispiel 2:*

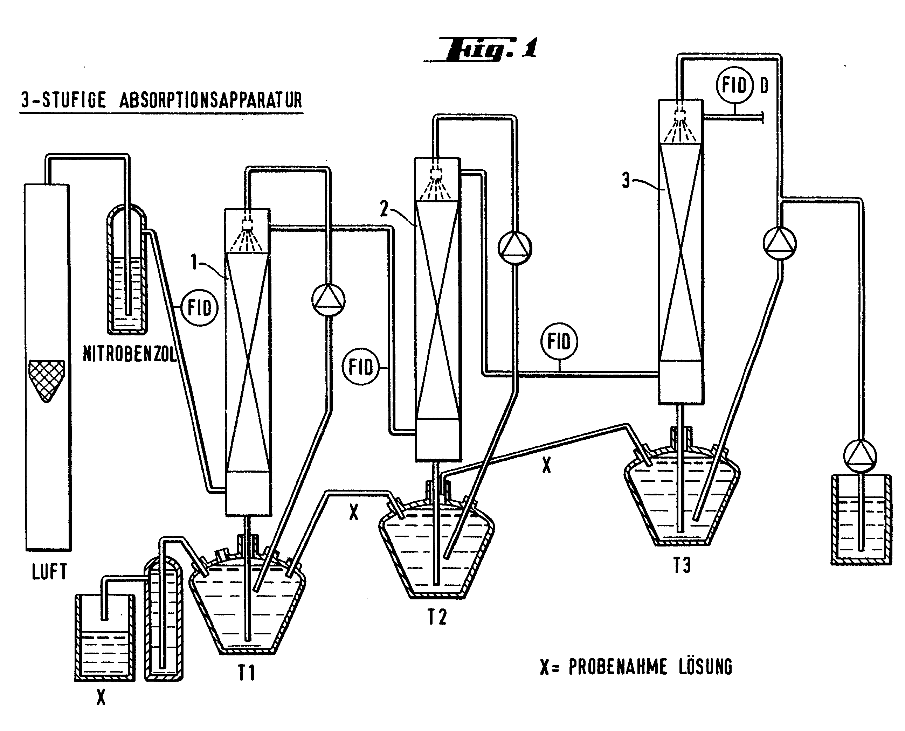

*Absorption in hintereinander geschalteten Waschtürmen (Fig. 1)*

Es werden drei Glaskolonnen mit folgenden Abmessungen verwendet:

| Durchmesser | 40 mm |
|---|---|
| Höhe | 500 mm |
| Füllhöhe | 400 mm |
| Durchmesser der Raschigringe | 10 mm |

Bei Raumtemperatur werden 660 l/h mit dem Schadstoff beladene Druckluft durch die drei hintereinander geschalteten Waschtürme geleitet. Die Absorptionslösung wird in jedem Turm im Kreislauf umgewälzt. Der Überlauf von Turm zu Turm erfolgt über den Sumpf. Je nach Versuch wird frisches oder regeneriertes Polyäthylenglykol Carbowax® PEG 400 kontinuierlich den Türmen 1, 2 oder 3 zugeführt.

Die Versuche dauern so lange, bis an allen Gasanalysestellen während 48 h mehrmals die gleichen Werte abgelesen werden können.

Die Konzentration des Nitrobenzols im PEG 400 wird durch Titanometrie, diejenige von 1,2-Dichlorbenzol und 1,2,4-Trichlorbenzol gaschromatografisch ermittelt. Der Wassergehalt der Absorptionslösung wird nach der Karl-Fischer-Methode bestimmt.

a) *Nitrobenzol*

| Gasmenge | 660 l/h |
|---|---|
| Verweilzeit pro Turm | 2,7 s |
| Berieselung: Versuche 1, 3-8 | 4,5 l/m³ Gas |
| Versuche 2, 9 | 0,2 l/m³ Gas |
| Temperatur | 20-25° C |

| Versuch | Dosierung PEG rein in T3 (ml/h) | PEG regeneriert Zusammensetzung (%) | | | | | Gaskonz. NB (mg/m³) | | | | Zusammensetzung Absorptionslösung (%) | | | | | |
|---|---|---|---|---|---|---|---|---|---|---|---|---|---|---|---|---|
| | | | | | | | | | | | T1 | | T2 | | T3 | |
| | | PEG | NB | H₂O | (ml/h) | Turm | T1 ein | T2 ein | T3 ein | T3 aus | NB | H₂O | NB | H₂O | NB | H₂O |
| 1 | 3,0 | — | — | — | — | — | 2000 | 850 | 380 | 150 | 18,3 | 3,1 | 7,0 | 3,0 | 2,7 | 3,1 |
| 2 | 9,4 | — | — | — | — | — | 2000 | 480 | 83 | 4,4 | — | — | — | — | — | — |
| 3 | — | 72 | — | 28 | 8,8 | 3 | 2000 | 510 | 174 | 39 | 11,2 | 3,1 | — | — | — | — |
| 4 | — | 72 | — | 28 | 12,7 | 3 | 2000 | 500 | 130 | 15 | — | — | — | — | — | — |
| 5 | — | 37,6 | 0,6 | 61,8 | 10,5 | 3 | 2000 | 726 | 305 | 308 | 15,2 | 3,4 | 4,7 | 7,4 | 0,35 | 37 |
| 6 | — | 37,6 | 0,6 | 61,8 | 14,6 | 3 | 2000 | 580 | 275 | 341 | 9,1 | 5,0 | 4,1 | 8,5 | 0,4 | 37 |
| 7 | — | 57,6 | 2,4 | 40 | 10,0 | 3 | 2000 | 667 | 262 | 176 | 10,7 | 3,0 | 4,7 | 3,9 | 2,5 | 9,0 |
| 8 | 3,0 | 57,6 | 2,4 | 40 | 8,0 | 1 | 2000 | 553 | 377 | 132 | 11,0 | 9,7 | 7,1 | 8,8 | 2,3 | 7,4 |
| 9 | 3,8 | 45 | 1,0 | 54 | 11,7 | 2 | 2000 | 429 | 330 | 140 | | | | | | |

Erläuterungen: PEG = Polyäthylenglykol Carbowax® PEG 400; NB = Nitrobenzol

In den Versuchen 5-9 enthält die regenerierte Absorptionslösung noch einen Anteil Nitrobenzol. In den Versuchen 5 und 6 wird ein Teil dieses Nitrobenzols in T3 ausgestrippt: die Nitrobenzolkonzentration im Absorbens ist im Sumpf kleiner als am Kopf der Kolonne T3, und im Gas ist sie am Ausgang von T3 höher als am Eingang von T3.

b) ·o-Dichlorbenzol (o-DCB)

| | |
|---|---|
| Gasmenge | 660 l/h |
| Verweilzeit pro Turm | 2,7 s |
| Berieselung: T1, T2 | 0,2 l/m³ |
| T3 zur Dosierung von reinem PEG | |
| Temperatur | 20-25° C |

| Versuch | Dosierung PEG in T3 (ml/h) | Gaskonz. o-DCB (mg/m³) | | | | Konz. o-DCB in PEG bei T1 aus (%) |
|---|---|---|---|---|---|---|
| | | T1 ein | T2 ein | T3 ein | T3 aus | |
| 1 | 107 | 1800 | 1500 | 250 | 27 | 1,29/1,41 |

c) 1,2,4-Trichlorbenzol (TCB)

| | |
|---|---|
| Gasmenge | 660 l/h |
| Verweilzeit pro Turm | 2,7 s |
| Berieselung: T1, T2 | 0,2 l/m³ |
| T3 zur Dosierung von reinem PEG | |
| Temperatur | 20-25° C |

| Versuch | Dosierung PEG in T3 (ml/h) | Gaskonz. TCB (mg/m³) | | | | Konz. TCB in PEG bei T1 aus (%) |
|---|---|---|---|---|---|---|
| | | ein | ein | ein | aus | |
| 1 | 29 | 2000 | 1200 | 220 | 28 | 4,1/3,8 |
| 2 | 23 | 2000 | 1350 | 540 | 88 | 5,2 |

*Beispiel 3:*

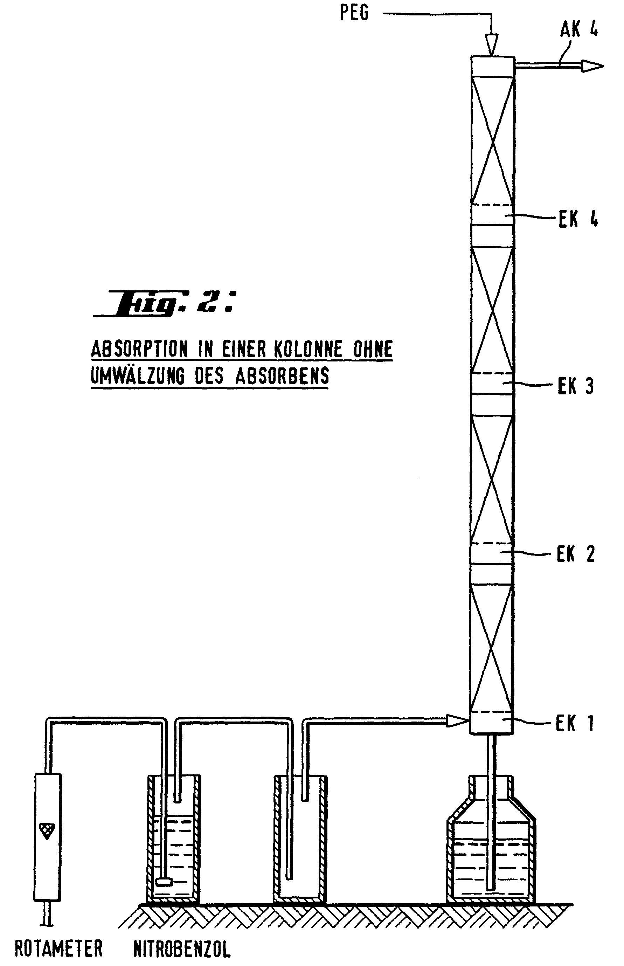

*Absorption in einer Kolonne ohne Umwälzung des Absorbens (Fig. 2)*

Die Kolonne besteht aus vier Teilstücken mit folgenden Abmessungen:

| | |
|---|---|
| Durchmesser | 40 mm |
| Höhe | 500 mm |
| Füllhöhe | 400 mm |
| Durchmesser der Raschigringe | 8 mm |

Mit Nitrobenzol gesättigte Luft wird mittels eines schwachen Unterdruckes durch die Kolonne gezogen. Im Gegenstrom wird am Kopf der Kolonne kontinuierlich oder in Portionen Polyäthylenglykol Carbowax® PEG 400 zudosiert. Nach jedem Teilelement der Kolonne kann die Nitrobenzolkonzentration im Gasstrom mit einem Hydroxarbonanalyzer FID bestimmt werden.

| | |
|---|---|
| Gasmenge | 660 l/h |
| Verweilzeit: pro Teilstück | 2,7 s |
| gesamte Kolonne | 10,8 s |
| Temperatur | 20-25° C |

Bei den Versuchen 1, 3, 4 erfolgt die PEG-Dosierung kontinuierlich. Bei Versuch 2 werden schubweise alle 3 h 14,4 ml PEG auf die Kolonne gegeben.

| Versuch | Dosierung PEG (ml/h) | Gaskonz. NB (mg/m³) | | | | | Konz. NB in PEG bei AK1 (%) |
|---|---|---|---|---|---|---|---|
| | | EK1 | EK2 | EK3 | EK4 | AK4 | |
| 1 | 4,7 | 2000 | 530 | 308 | 176 | 110 | 21,0 |
| 2 | 14,4/3 h | 2000 | 750 | 506 | 308 | 187 | 20,0 |
| 3 | 7,6 | 2000 | 540 | 231 | 154 | 60 | 14,8 |
| 4 | 9,0 | 2000 | 500 | 140 | 85 | 22 | 12,8 |

*Beispiel 4:*

*Regeneration des Absorptionsmittels*

Bei der Zugabe von Wasser zur mit Nitrobenzol gesättigten Lösung von Polyäthylenglykol tritt eine Phasentrennung auf. Nitrobenzol mit einem hohen Reinheitsgrad bildet dabei die untere und eine Absorbens/Wasser-Lösung die obere Phase. Nach der Phasentrennung wird das Wasser vom Absorbens abdestilliert. Auf diese Weise lässt sich eine aufwendige destillative Trennung des Nitrobenzols vom Absorbens umgehen. Die gleiche Methode wird auch zur Regeneration von mit o-Dichlor- und 1,2,4-Trichlorbenzol verunreinigtem Polyäthylenglykol angewendet.

Lösung: 1 Teil Nitrobenzol + 4 Teile Carbowax® PEG 400
Destillation der wässerigen Oberphase im Rotationsverdampfer bei 60° C und 10 mmHg (13,33 mbar)
Dauer 30 min

| Versuch | Lösung (g) | H₂O (g) | H₂O/ Nitrobenzol | Unterphase (g) | Rotavap Rückstand (g) | Destillat H₂O (g) | Nitrobenzol (g) | Analyse (%) gelöstes Nitrobenzol | | H₂O |
|---|---|---|---|---|---|---|---|---|---|---|
| | | | | | | | | Unterphase | Rückstand | |
| 1 | 50 | 10 | 1 | — | — | — | — | — | — | — |
| 2 | 50 | 25 | 2,5 | 8,4 | 40,3 | 24,3 | ? | 94,3 | 3,06 | 0,98 |
| 3 | 50 | 50 | 5 | 8,4 | 38,9 | 46,3 | ? | 98,9 | 0,31 | 0,18 |
| 4 | 50 | 100 | 10 | 8,4 | 41,7 | 74,3 | ? | 99,3 | 0,03 | 0,29 |

| Versuch | Lösung (g) | H₂O (g) | H₂O/Nitrobenzol | Unterphase (g) | Rotavap Rückstand (g) | Destillat H₂O (g) | Nitrobenzol (g) | Analyse (%) gelöstes Nitrobenzol | | H₂O |
|---|---|---|---|---|---|---|---|---|---|---|
| | | | | | | | | Unterphase | Rückstand | |
| 5 | 100 | 20 | 1 | — | — | — | — | — | — | — |
| 6 | 100 | 40 | 2 | 13,7 | 80,7 | 40,4 | 1,0 | 87,4 | 5,60 | 0,21 |
| 7 | 100 | 60 | 3 | 16,7 | 79,8 | 44,6 | 1,2 | 97,3 | 1,52 | 0,64 |
| 8 | 100 | 90 | 4,5 | 18,0 | 79,8 | 55,0 | 1,8 | 98,1 | 0,42 | 0,19 |

Lösung: 1 Teil o-Dichlorbenzol + 9 Teile Polyäthylenglykol
Destillation der wässerigen Oberphase im Rotationsverdampfer bei 60° C und 10 mmHg (13,33 mbar).
Dauer 30 min

| Versuch | Lösung (g) | H₂O (g) | Verhältnis H₂O/o-DCB | Rotavap | | | Unterphase | | |
|---|---|---|---|---|---|---|---|---|---|
| | | | | Rückstand (g) | Destillat | | (g) | o-DCB (%) | H₂O (%) |
| | | | | | H₂O (g) | o-DCB (g) | | | |
| 1 | 100 | 25 | 2,5 | — | — | — | — | — | — |
| 2 | 100 | 50 | 5 | 89,9 | 38,9 | 1,6 | 7,1 | 96 | 0,3 |
| 3 | 100 | 75 | 7,5 | 89,9 | 70,6 | 0,6 | 8,8 | 98 | 0,5 |
| 4 | 100 | 100 | 10 | 90,1 | 96,1 | 0,1 | 9,2 | 98 | 0,2 |
| 5 | 100 | 150 | 15 | 91,4 | 134,9 | 0 | 9,6 | 98 | 0,2 |
| 6 | 100 | 200 | 20 | 91,1 | 192,6 | 0 | 9,4 | 98 | 0,4 |

Lösung: 15 Teile 1,2,4-Trichlorbenzol + 85 Teile Polyäthylenglykol
Destillation der wässerigen Oberphase im Rotationsverdampfer bei 60° C und 10 mmHg (13,33 mbar).
Dauer 30 min

| Versuch | Lösung (g) | H₂O (g) | Verhältnis H₂O/TCB | Rotavap | | | Unterphase | | |
|---|---|---|---|---|---|---|---|---|---|
| | | | | Rückstand (g) | Destillat | | (g) | TCB* (%) | H₂O (%) |
| | | | | | H₂O (g) | TCB (g) | | | |
| 1 | 100 | 25 | 1,67 | 86,5 | 20,3 | 0,9 | 10,6 | 93,5 | 1,2 |
| 2 | 100 | 50 | 3,33 | 85,0 | 44,6 | 0,5 | 13,9 | 95,7 | 1,5 |
| 3 | 100 | 75 | 5 | 85,4 | 71,0 | 0,4 | 14,3 | 95,2 | 1,5 |
| 4 | 100 | 100 | 6,67 | 86,7 | 92,1 | 0,3 | 14,5 | 95 | 2,9 |
| 5 | 100 | 150 | 10 | 85,2 | 141,0 | 0,2 | 14,9 | 95 | 1,3 |
| 6 | 100 | 200 | 13,3 | 84,4 | 188,3 | 0,1 | 14,8 | 97 | 1,6 |

* Das eingesetzte TCB weist einen Reinheitsgrad von 97% auf

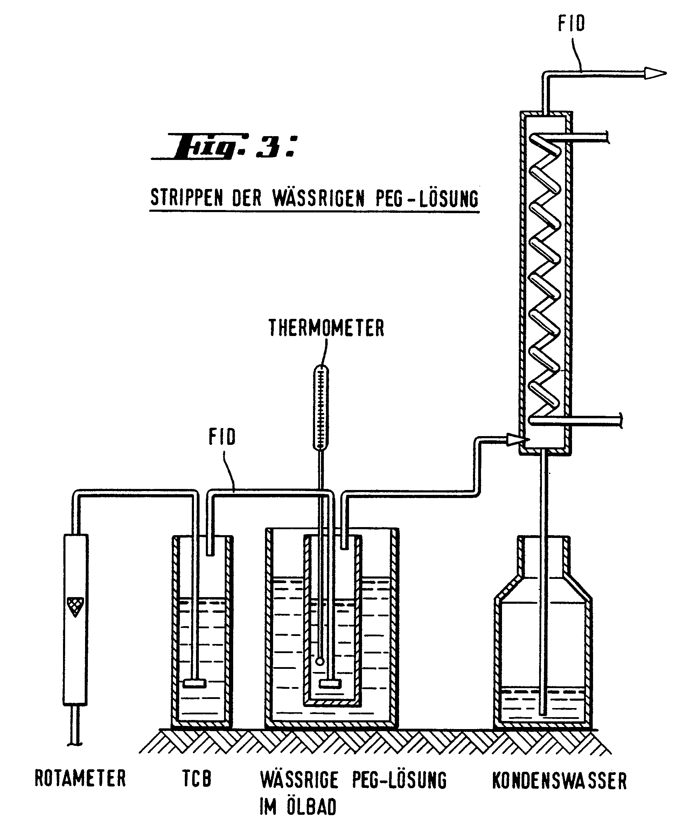

*Strippen des wässerigen Absorbens/Wasser-Gemisches (Fig. 3)*

Menge mit H₂O versetzter Absorptionslösung nach

| | |
|---|---|
| Phasentrennung | 185 g |
| Gasmenge: Versuch 1 | 300 l/h |
| Versuche 2 und 3 | 150 l/h |
| Versuchsdauer | 2 h |

| Versuch | Konz. TCB im Gaz (mg/m³) | Temp. der Lösung (°C) | Zusammensetzung der Lösung zu Beginn (%) | | | Zusammensetzung der Lösung am Ende (%) | | |
|---|---|---|---|---|---|---|---|---|
| | | | PEG | TCB | H₂O | PEG | TCB | H₂O |
| 1 | — | 75 | 52,8 | 0,46 | 46,7 | 93,5 | 0,47 | 6,0 |
| 2 | 1900 | 108 | 53,2 | — | 46,8 | 99,5 | 0,47 | 0 |
| 3 | 1900 | 108 | 52,8 | 0,46 | 46,7 | 99,6 | 0,40 | 0 |

## Patentansprüche

1. Verfahren zur absorptiven Abscheidung von organischen Stoffen aus Abluftdämpfen, dadurch gekennzeichnet, dass man organische Stoffe enthaltende Abluftdämpfe durch eine mit Wasser homogen mischbare, hochsiedende organische Flüssigkeit leitet, anschliessend Wasser zum Absorbens gibt und den abgeschiedenen organischen Stoff nach der Phasentrennung vom Absorbens/Wasser-Gemisch abtrennt.

2. Verfahren nach Anspruch 1, dadurch gekennzeichnet, dass man wasserunlösliche organische Stoffe aus Abluftdämpfen abscheidet.

3. Verfahren nach Anspruch 2, dadurch gekennzeichnet, dass man Nitro-, Dichlor- und/oder Trichlorbenzol aus Abluftdämpfen abscheidet.

4. Verfahren nach Anspruch 1, dadurch gekennzeichnet, dass man die organische Stoffe enthaltenden Abluftdämpfe durch Polyäthylenglykol leitet.

5. Verfahren nach Anspruch 1, dadurch gekennzeichnet, dass man die organische Stoffe enthaltenden Abluftdämpfe durch einen oder mehrere Gaswaschtürme leitet, die mit einer hochsiedenden organischen Flüssigkeit berieselt werden.

6. Verfahren nach Anspruch 1, dadurch gekennzeichnet, dass man das Wasser nach dem Abtrennen des organischen Stoffs vom Absorbens/Wasser-Gemisch abdestilliert.

7. Verfahren nach Anspruch 1, dadurch gekennzeichnet, dass man das Wasser nach dem Abtrennen des organischen Stoffs aus dem erwärmten Absorbens/Wasser-Gemisch durch Strippen mit Schadstoff beladener Luft austreibt und anschliessend durch Abkühlung des Luft/Dampf-Gemisches auskondensiert.

8. Verfahren nach Anspruch 7, dadurch gekennzeichnet, dass man das Wasser aus dem auf 70-120° C erwärmten Absorbens/Wasser-Gemisch austreibt.

## Claims

1. A process for recovering organic substances from spent air vapours by absorption, which process comprises passing spent air vapours which contain organic substances through an organic liquid which has a high boiling point and is homogeneously miscible with water, subsequently adding water to the absorbent and separating the recovered organic substance from the absorbent/water mixture after phase separation.

2. A process according to Claim 1, wherein water-insoluble organic substances are recovered from spent air vapours.

3. A process according to Claim 2, wherein nitro-, dichloro- and/or trichlorobenzene are recovered from spent air vapours.

4. A process according to Claim 1, wherein the spent air vapours containing organic substances are passed through polyethylene glycol.

5. A process according to Claim 1, wherein the spent air vapours which contain organic substances are passed through one or more gas-washing columns which are irrigated with a high-boiling organic liquid.

6. A process according to Claim 1, wherein the water is distilled off from the absorbent/water mixture after recovery of the organic substance.

7. A process according to Claim 1, wherein the water is removed from the heated absorbent/water mixture, after recovery of the organic substance, by stripping with air saturated with pollutant and subsequently condensing the water by cooling the air/vapour mixture.

8. A process according to Claim 7, wherein the water is removed from the absorbent/water mixture which is heated to 70-120° C.

## Revendications

1. Procédé de séparation par absorption de substances organiques de gaz effluents, caractérisé par le fait qu'on fait passer les gaz effluents contenant des substances organiques dans un liquide organique à point d'ébullition élevé, miscible d'une façon homogène avec l'eau, puis par le fait qu'on ajoute de l'eau à l'absorption et qu'on enlève la matière organique décantée après la séparation de phase du mélange d'absorbant et d'eau.

2. Procédé selon la revendication 1, caractérisé par le fait qu'on sépare des substances organiques insolubles dans l'eau de gaz effluents.

3. Procédé selon la revendication 2, caractérisé par le fait qu'on sépare le nitro-, le dichloro- et/ou le trichlorobenzène de gaz effluents.

4. Procédé selon la revendication 1, caractérisé par le fait qu'on fait passer les gaz effluents contenant des substances organiques dans du polyéthylèneglycol.

5. Procédé selon la revendication 1, caractérisé par le fait qu'on fait passer les gaz effluents contenant des substances organiques dans une ou plusieurs tours de lavage de gaz, qui sont arrosées par ruissellement avec un liquide organique à point d'ébullition élevé.

6. Procédé selon la revendication 1, caractérisé par le fait qu'on élimine par distillation l'eau du mélange d'absorbant et d'eau après la séparation de la substance organique.

7. Procédé selon la revendication 1, caractérisé par le fait qu'on extrait l'eau du mélange d'absorbant et d'eau chauffé, après la séparation de la substance organique, par stripping avec l'air chargé de substance nocive, puis par le fait qu'on la condense par refroidissement du mélange d'air et de vapeur.

8. Procédé selon la revendication 7, caractérisé par le fait qu'on extrait l'eau du mélange d'absorbant et d'eau chauffé à 70-120° C.

**Fig. 1**

3-STUFIGE ABSORPTIONSAPPARATUR

FID D

FID

FID

FID

FID

3

2

1

NITROBENZOL

LUFT

T1

T2

T3

X

X

X

X = PROBENAHME LÖSUNG

# Fig. 2:

## ABSORPTION IN EINER KOLONNE OHNE UMWÄLZUNG DES ABSORBENS

PEG

AK 4

EK 4

EK 3

EK 2

EK 1

ROTAMETER   NITROBENZOL

*Fig. 3:*

STRIPPEN DER WÄSSRIGEN PEG-LÖSUNG

FID

THERMOMETER

FID

ROTAMETER  TCB  WÄSSRIGE PEG-LÖSUNG  KONDENSWASSER
IM ÖLBAD